# EUROPÄISCHE PATENTSCHRIFT

(11) **EP 0 539 826 B1**
(45) Veröffentlichungstag und Bekanntmachung des Hinweises auf die Patenterteilung: **20.12.1995**
(21) Anmeldenummer: 92117821.6
(22) Anmeldetag: 19.10.1992
(51) Int. Cl.: C08J 9/00, C08J 9/12

(54) **Recycelbarer Thermoplastschaum mit hoher Glastemperatur**
Recyclable thermoplastic foam with high glass temperature
Mousse thermoplastique recyclable à haute température de transition vitreuse

(30) Priorität: 30.10.1991 DE 4135743; 23.04.1992 DE 4213326
(43) Veröffentlichungstag der Anmeldung: 05.05.1993
(73) Patentinhaber: BAYER AG, 51368 Leverkusen (DE)
(72) Erfinder: Ebert, Wolfgang, Dr., W-4150 Krefeld (DE); Kirsch, Jürgen, Dr., W-5090 Leverkusen (DE); Köhler, Burkhard, Dr., W-4150 Krefeld 11 (DE); Beer, Wolfgang, Dr., W-4150 Krefeld (DE); Anders, Siegfried, Dr., W-5000 Köln 90 (DE); Dhein, Rolf, Dr., W-4150 Krefeld (DE)

(56) Entgegenhaltungen:
- EP-A- 0 276 430
- EP-A- 0 415 744
- DE-A- 2 729 493
- US-A- 4 407 768
- CHEMICAL ABSTRACTS, vol. 89, 1978, Columbus, Ohio, US; abstract no. 44653g, KUBO & AL "thermoplastic foams" Seite 31; & JP-A-7 829 368 (MATSUSHITA ELECTRIC WORKS LTD...)

## Beschreibung

Gegenstand der vorliegenden Erfindung sind Thermoplastschäume, die dadurch gekennzeichnet sind, daß als Verschäumungsagentien Tonerdehydrate (Aluminiumhydroxide) in Mengen von 0,01 Gew.-% bis 4,8 Gew.-%, vorzugsweise von 0,1 Gew.-% bis 4,0 Gew.-% und insbesondere von 0,1 Gew.-% bis 2,5 Gew.-% in Kombination mit Säuren, vorzugsweise mit sauren kristallwasserhaltigen Salzen, in Mengen von 0,01 Gew.-% bis 4,8 Gew.-%, vorzugsweise von 0,1 Gew.-% bis 4,0 Gew.-% und insbesondere von 0,1 Gew.-% bis 2,5 Gew.-%, verwendet werden, oder aber Umsetzungsprodukte der Verschäumungsagentien untereinander in Mengen von 0,01 Gew..-% bis 4,8 Gew.-%, vorzugsweise von 0,1 Gew.-% bis 4,0 Gew.-%, verwendet werden, wobei sich alle Gewichtsprozente auf das Gewicht des jeweils zu verschäumenden Thermoplasten beziehen.

Schaumstoffe aus hochmolekularen Polycarbonaten sind bekannt (siehe beispielsweise DE-AS 1 031 507). Als Treibmittel sind beispielsweise solche geeignet, die CO₂ abspalten, oder inerte Gase wie N₂ oder CO₂.

Dabei beobachtet man im allgemeinen einen deutlichen Abbau der Molekulargewichte. Die nicht flüchtigen Spaltprodukte des Treibmittels verbleiben in den Schaumstoffen.

Es ist auch bekannt, daß man aromatische Polycarbonate nur in vollständig trockenem Zustand einwandfrei verarbeiten kann. Darin enthaltene Feuchtigkeit führt bei der Verarbeitung zum Abbau des Molekulargewichtes und zur Bildung von Blasen (vergl. Plastics Technology 10, 1964, Seite 32 bis 36; GB-PS 841 652).

Die Aufgabe bestand daher darin, einen feinporigen Schaum zu entwickeln, der auch bei Reextrusion, gegebenenfalls Wiederverschäumung, keinen oder nur geringen Molekulargewichtsabbau zeigt.

Das Problem wurde mit der erfindungsgemäßen Kombination von Aluminiumhydroxyden und sauren Zuschlägen gelöst.

Thermoplasten, die zur Verschäumung verwendet werden, sind solche, die überwiegend amorph oder transparent sind; Polyethersulfone, Polysulfone und Polyetherketone aus 4,4-Dichlorsulfon bzw. 4,4-Difluorbenzophenon und einer oder mehreren der unter den Polycarbonatbausteinen genannten aromatischen Dihydroxyverbindungen, sofern das entsprechende Polymer überwiegend amorph ist; außerdem sind ABS-Polymerisate sowie insbesondere Polycarbonate und Polyestercarbonate und deren Siloxan- oder Dimerfettsäure-haltigen Blockcopolymeren geeignet.

Darüberhinaus sind als Thermoplasten auch beliebige Mischungen der vorstehend genannten Thermoplasten geeignet, beispielsweise Mischungen aus Polycarbonaten und ABS-Polymerisaten.

Thermoplastische aromatische Polycarbonate im Sinne der vorliegenden Erfindung sind Polycarbonate, die nach den üblichen, in der Literatur bekannten Methoden aus Diphenolen und Carbonatspendern hergestellt worden sind [siehe beispielsweise H. Schnell, "Chemistry and Physics of Polycarbonates, Interscience Publishers, New York, 1964", US-Patent 3 028 365 und deutsche Offenlegungsschrift 3 832 396 (Le A 26 344)].

Diphenole für solche Polycarbonate können beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen sein.

Bevorzugte Diphenole sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Die Diphenole können sowohl allein als auch im Gemisch miteinander verwendet werden, es sind also sowohl Homopolycarbonate als auch Copolycarbonate einbezogen. Die Diphenole sind literaturbekannt oder nach literaturbekannten Verfahren herstellbar.

Es können auch geringe Mengen, vorzugsweise Mengen zwischen 0,05 und 2,0 Mol-%, bezogen auf die Mole eingesetzter Diphenole, an tri- oder mehr als trifunktionellen Verbindungen, insbesondere solchen mit drei oder mehr als drei phenolischen Hydroxylgruppen, mitverwendet werden. Einige der verwendbaren Verbindungen mit drei oder mehr als drei phenolischen Hydroxylgruppen sind beispielsweise:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis(2-hydroxy-5'-methyl-benzyl)-4-methylphenol,
2-(4-Hydroxyphenyl)-2-(3,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan und
1,4-Bis-(4',4''-dihydroxytriphenyl)-methyl-benzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern können entweder mit den Diphenolen selbst und den Molekulargewichtsreglern in der wäßrigen alkalischen Phase vorgelegt werden, oder in einem organischen Lösungsmittel, gelöst vor der Phosgenierung, zugegeben werden.

Geeignete Molekulargewichtsregler sind die bekannten, vorzugsweise Monophenole.

Die aromatischen Polycarbonate gemäß vorliegender Erfindung sollen Gewichtsmittelmolekulargewichte M̅w (ermittelt mittels Gelpermeations-Chromatographie) zwischen 5.000 und 50.000, vorzugsweise zwischen 15.000 und 35.000 haben.

Die Lösungsviskositäten liegen entsprechend zwischen 1,15 und 1,35, gemessen in Dichlormethan (0,5 g/100 ml).

Die thermoplastischen Polycarbonate werden vorzugsweise in ungetrocknetem Zustand verschäumt.

Thermoplastische aromatische Polyestercarbonate im Sinne der vorliegenden Erfindung sind sozusagen "aromatische Polycarbonate" in denen ein Teil, maximal 50 Mol-% an Carbonatstruktureinheiten durch aromatische Dicarboxylat-Struktureinheiten in bekannter Weise ersetzt sind.

Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Diphenyletherdicarbonsäure, 4,4'-Benzophenondicarbonsäure, 3,4'-Benzophenondicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Geeignete Diphenole sind die vorstehend für die Polycarbonatherstellung genannten.

Entsprechendes gilt für die Verzweiger und für die monophenolischen Kettenabbrecher, wobei hier aber auch aromatische Monocarbonsäuren beispielsweise in Form ihrer Säurechloride oder Ester verwendet werden können.

Die Kohlensäure kann entweder via COCl₂ oder via Diphenylcarbonat in die Polyestercarbonate eingebaut werden, je nach Wahl des Herstellungsverfahrens, also je nachdem, ob Phasengrenzflächenpolykondensation oder Schmelzumesterung zur Polyestercarbonatherstellung verwendet wird.

Entsprechendes gilt für die aromatischen Dicarbonsäuren; sie werden entweder als aromatische Dicarbonsäuredichloride im Zweiphasengrenzflächenverfahren oder als Dicarbonsäurediester im Schmelzumesterungsverfahren eingesetzt. Entsprechendes gilt, falls als Kettenabbrecher Monocarbonsäuren eingesetzt werden.

Die Herstellung der erfindungsgemäß zu verschäumenden Polyestercarbonate erfolgt nach bekannten Herstellungsverfahren, also wie bereits erwähnt beispielsweise nach dem Phasengrenzflächenverfahren oder nach dem Schmelzumesterungsverfahren.

Die zu verschäumenden Polyestercarbonate können somit sowohl linear als auch in bekannter Weise verzweigt sein. Sie werden vorzugsweise in ungetrocknetem Zustand verschäumt.

Die aromatischen Polyestercarbonate gemäß vorliegender Erfindung haben mittlere Gewichtsmittelmolekulargewichte M̅w (ermittelt mittels Gelpermeations-Chromatographie) zwischen 5.000 und 50.000, vorzugsweise zwischen 15.000 und 35.000.

Die Lösungsviskositäten liegen entsprechend zwischen 1,15 und 1,35, gemessen in Dichlormethan (0,5 g/100 ml).

Die molare Menge an Carbonat-Einheiten zu aromatischen Dicarboxylateinheiten in den erfindungsgemäße zu verschäumenden Polyestercarbonaten liegt mindestens bei 50:50, vorzugsweise bei 75:25 und insbesondere bei 90:10. Mit anderen Worten, bei den erfindungsgemäß zu verschäumenden Polyestercarbonaten liegt das Übergewicht bei den Carbonatstruktureinheiten, als der CO₂-Resource.

Erfindungsgemäß einzusetzende Tonerdehydrate oder Aluminiumhydroxide entsprechen der Formel

Al₂O₃(H₂O)₃

und sind als solche literaturbekannt.

Derartige Tonerdehydrate oder Aluminiumhydroxyde werden in Korngrößen von 0,1 »m bis 400 »m, bevorzugt 0,3 »m bis 100 »m verwendet. Andere anorganische Verunreinigungen sind so klein wie möglich zu halten und dürfen 1,5 % nicht überschreiten.

Die Tonerdehydrate werden erfindungsgemäß mit organischen oder anorganischen Säuren oder mit kristallwasserhaltigen sauren Salzen eingesetzt.

Geeignete anorganische Säuren sind m-Phosphorsäure, an Alumosilikate gebundene Mineralsäuren, saure Aluminiumoxyde oder Kieselsäure.

Geeignete organische Säuren sind aromatische Polycarbonsäuren, insbesondere aromatische Tricarbonsäuren, vor allem solche, deren Carboxylgruppen nicht zur Ausbildung eines 5-Ring- oder 6-Ring-Dianhydrids befähigt sind.

Geeignete Polycarbonsäuren sind beispielsweise Trimesinsäure, Isophthalsäure, Terephthalsäure, 3,3'-, 4,4'- oder 3,3'-Diphenyletherdicarbonsäure, 2,6-Naphthalindicarbonsäure, Trimellithsäure, 1,4,5,8-Naphthalintetracarbonsäure, Trimellithsäure, 1,4,5,8-Naphthalintetracarbonsäure, 3,3',4,4'-Benzophenontetracarbonsäure, 2,2',4,4'-Diphenylsulfontetracarbonsäure, Phthalsäure und 2,2',4,4'-Diphenylethertetracarbonsäure, aber auch aromatische Hydroxypolycarbonsäuren wie 3- oder 4-Hydroxyphthalsäure, Hydroxyterephthalsäure und 2,5-Dihydroxyterephthalsäure. Bevorzugte Polycarbonsäure ist die Trimesinsäure.

Geeignete organische Säuren sind auch aliphatische Hydroxycarbonsäuren wie Glyoxylsäure, Milchsäure, ε-Hydroxycapronsäure, γ-Hydroxybuttersäure, Apfelsäure oder Weinsäure.

Saure Zuschläge im Sinne der Erfindung sind insbesondere die Monosalze organischer Dicarbonsäuren sowie die Mono- oder Di-Salze organischer Tricarbonsäuren, die Na, K, Mg, Ca, Zn oder Al als Gegenion haben, vorzugsweise Na oder Ca als Gegenion haben.

Besonders bevorzugt als saure Zuschläge sind jedoch saure, kristallwasserhaltige Salze von Mineralsäuren oder organischen Säuren. Es sind dies die teilweise neutralisierten mehrbasigen Säuren. So z.B. die "Hydrogen"-salze der Phosphorsäure, Borsäure und der Schwefelsäure, wobei die Alkali-, Erdalkali- und farblosen Schwermetallsalze und Aluminiumsalze bevorzugt sind, insbesondere sind die Natrium-, Kalium-, Magnesium-, Calcium-, Zink- und Aluminiumsalze bevorzugt wie z.B. das primäre und sekundäre Natrium- oder Calcium-Sulfat oder -Phosphat.

Besonders geeignet sind somit als saure kristallwasserhaltige Salze primäre Sulfate oder primäre oder sekundäre Phosphate, die Na, K, Mg, Ca, Zn oder Al als Gegenion haben.

Insbesondere sind als saure kristallwasserhaltige Salze primäre Natrium- oder Calciumphosphate bevorzugt.

Umsetzungsprodukte der Verschäumungsagentien untereinander sind die Umsetzungsprodukte aus den Tonerdehydraten, also den Aluminiumhydroxyden, mit einem oder mehreren der sauren Zuschläge, also beispielsweise neutrale Aluminiumsalze der Mineralsäuren, welche vor der Verschäumung synthetisiert und danach den Thermoplasten zugemischt werden.

Die Herstellung der erfindungsgemäßen Thermoplastschäume erfolgt in der Weise, daß man die Verschäumungsagentien oder deren Umsetzungsprodukte untereinander und die Thermoplasten bei Temperaturen von 220°C bis 380°C im Extruder zu geschäumten Formkörpern extrudiert oder bei Temperaturen von 220°C bis 380°C in Spritzgußmaschinen zu geschäumten Formkörpern spritzgießt.

Gegenstand der vorliegenden Erfindung ist somit auch ein Verfahren zur Herstellung der erfindungsgemäßen Thermoplastschäume, das dadurch gekennzeichnet ist, daß man die Verschäumungsagentien oder deren Umsetzungsprodukte untereinander und die Thermoplasten bei Temperaturen von 220°C bis 380°C im Extruder zu geschäumten Formkörpern extrudiert oder bei Temperaturen von 220°C bis 380°C in Spritzgußmaschinen zu geschäumten Formkörpern spritzgießt.

Das erfindungsgemäße Verschäumungsverfahren kann noch unter Zusatz von für die Schaumherstellung üblichen Additiven wie Verstärkungsstoffen, beispielsweise Glasfasern, und/oder Nukleierungsmitteln und/oder Flammschutzmitteln und/oder Entformungsmitteln und/oder Gleitmitteln, Farbstoffen und/oder Pigmenten, beispielsweise Rutil oder Ruß, und/oder Stabilisatoren gegen Hitze, UV-Strahlung und Feuchtigkeit durchgeführt werden.

Gegenstand der vorliegenden Erfindung ist somit außerdem die Modifizierung des erfindungsgemäßen Verschäumungsverfahrens, indem man vor dem Verschäumen die üblichen Additive wie Verstärkungsstoffe, Nucleierungsmittel, Flammschutzmittel, Entformungsmittel, Gleitmittel, Farbstoffe, Pigmente und/oder Stabilisatoren den zu verschäumenden Thermoplasten zumischt.

Gegenstand der vorliegenden Erfindung sind außerdem die nach diesem erfindungsgemäßen Verfahren erhältlichen, Additiv-haltigen Schaumstoff-Formkörper.

### Beispiele

### Beispiel 1

200 g BPA-Polycarbonat (η = 1,28) werden zusammen mit 0,5 Gew.-% Tonerdehydrat und 0,5 Gew.-% Natriumdihydrogenphosphat (x 2 H₂O) bei 230°C extrudiert. Es wurde ein farbloser Schaum mit einer Dichte von τ = 0,48 g/cm³ erhalten. Die rel. Viskosität betrug η = 1,27.

Dieser Schaum wurde gehäckselt und
a) reextrudiert, man erhält Polycarbonat mit einer rel. Viskosität von η = 1,27
b) reextrudiert mit weiteren 0,5 Gew.-% Tonerdehydrat und 0,5 Gew.-% Natriumdihydrogenphosphat (x 2 H₂O) bei 230°C extrudiert. Es wurde ein farbloser Schaum mit einer Dichte von τ = 0,57 g/cm³ erhalten. Die rel. Viskosität betrug η = 1,27.

### Beispiel 2 (Vergleich)

200 g BPA-Polycarbonat (η = 1,28) werden zusammen mit 0,5 Gew.-% Tonerdehydrat bei 230°C extrudiert. Es wurde ein farbloser Schaum mit einer Dichte von τ = 0,44 g/cm³ erhalten. Die rel. Viskosität betrug η = 1,23.

### Beispiel 3

200 g BPA-Polycarbonat (η = 1,28) werden zusammen mit 1,0 Gew.-% Tonerdehydrat und 1,0 Gew.-% Natriumdihydrogenphosphat (x 2 H₂O) bei 230°C extrudiert. Es wurde ein farbloser Schaum mit einer Dichte von τ = 0,37 g/cm³ erhalten. Die rel. Viskosität betrug η = 1,27.

### Beispiel 4

200 g BPA-Polycarbonat (η = 1,28) werden zusammen mit 1,0 Gew.-% Tonerdehydrat und 1,0 Gew.-% prim. Calciumphosphat x H₂O bei 230°C extrudiert. Es wurde ein farbloser Schaum mit einer Dichte von τ = 0,67 g/cm³ erhalten. Die rel. Viskosität betrug η = 1,27.

### Beispiel 5

200 g BPA-Polycarbonat (η = 1,28) werden zusammen mit 1,0 Gew.-% Tonerdehydrat und 1,5 Gew.-% prim. Natriumphosphat x 2 H₂O bei 230°C extrudiert. Es wurde ein farbloser Schaum mit einer Dichte von τ = 0,46 g/cm³ erhalten. Die rel. Viskosität betrug η = 1,29.

### Beispiel 6

200 g BPA-Polycarbonat (η = 1,28) werden zusammen mit 1,0 Gew.-% Tonerdehydrat und 1,0 Gew.-% sec. Natriumphosphat x 12 H₂O bei 230°C extrudiert. Es wurde ein farbloser Schaum mit einer Dichte von τ = 0,41 g/cm³ erhalten. Die rel. Viskosität betrug η = 1,27.

### Beispiel 7

200 g BPA-Polycarbonat (η = 1,28) werden zusammen mit 1,0 Gew.-% Tonerdehydrat und 1,0 Gew.-% sec. Calciumphosphat x 2 H₂O bei 230°C extrudiert. Es wurde ein farbloser Schaum mit einer Dichte von τ = 0,42 g/cm³ erhalten. Die rel. Viskosität betrug η = 1,27.

## Patentansprüche

1. Thermoplastschäume aus Polycarbonaten, Polyestercarbonaten, Polysulfonen, Polyethersulfonen oder ABS Polymerisaten oder aus beliebigen Mischungen dieser Thermoplasten: dadurch gekennzeichnet: daß als Verschäumungsagentien Tonerdehydrate (Aluminiumhydroxide) in Mengen von 0,01 Gew.-% bis 4,8 Gew.-% in Kombination mit organischen Säuren, anorganischen Säuren oder mit sauren kristallwasserhaltigen Salzen, in Mengen von 0,01 Gew.-% bis 4,8 Gew.-% verwendet werden: oder aber Umsetzungsprodukte der Verschäumungsagentien untereinander in Mengen von 0,01 Gew..-% bis 4,8 Gew.-% verwendet werden, wobei sich alle Gewichtsprozente auf das Gewicht des jeweils zu verschäumenden Thermoplasten beziehen.

2. Thermoplastschäume gemäß Anspruch 1, dadurch gekennzeichnet, daß die sauren, kristallwasserhaltigen Salze primäre Sulfate oder primäre oder sekundäre Phosphate sind, die auch im Gemisch verwendet werden können, und Na, K, Mg, Ca, Zn oder Al als Gegenion haben.

3. Thermoplastschäume gemäß Anspruch 1, dadurch gekennzeichnet, daß die sauren, kristallwasserhaltigen Salze primäre Natrium- oder Calciumphosphate sind.

4. Thermoplastschäume gemäß Ansprüchen 1 bis 3, dadurch gekennzeichnet, daß der Thermoplast ungetrocknetes Polycarbonat und/oder ungetrocknetes Polyestercarbonat ist.

5. Thermoplastschäume gemäß Ansprüchen 1 bis 3, dadurch gekennzeichnet, daß der Thermoplast ein Polysulfon oder Polyethersulfon oder ABS-Polymerisat ist.

6. Verfahren zur Herstellung der Thermoplastschäume der Ansprüche 1 bis 5, dadurch gekennzeichnet, daß man die Verschäumungsagentien oder deren Umsetzungsprodukte untereinander und die Thermoplasten bei Temperaturen von 220°C bis 380°C im Extruder zu geschäumten Formkörpern extrudiert oder bei Temperaturen von 220°C bis 380°C in Spritzgußmaschinen zu geschäumten Formkörpern spritzgießt.

7. Verfahren gemäß Anspruch 6, dadurch gekennzeichnet, daß man vor dem Verschäumen die üblichen Additive wie Verstärkungsstoffe, Nucleierungsmittel, Flammschutzmittel, Entformungsmittel, Gleitmittel, Farbstoffe, Pigmente und/oder Stabilisatoren den zu verschäumenden Thermoplasten zumischt.

8. Schaumstoff-Formkörper, erhältlich gemäß Anspruch 7.

9. Thermoplastschäume gemäß Anspruch 1, dadurch gekennzeichnet, daß die Thermoplasten Mischungen verschiedener Thermoplasten sind.

10. Thermoplastschäume gemäß Anspruch 9, dadurch gekennzeichnet, daß die Thermoplastmischungen Mischungen aus Polycarbonaten und ABS-Polymerisaten sind.

## Claims

1. Thermoplastic foams comprising polycarbonates, polyester carbonates, polysulphones, polyether sulphones or ABS polymers or comprising any mixtures of these thermoplastics, characterised in that hydrated aluminas (aluminium hydroxides) are used as foaming agents in amounts of 0.01 % by weight to 4.8 % by weight, in combination with organic acids, inorganic acids or with acidic salts containing water of crystallisation in amounts of 0.01 % by weight to 4.8 % by weight, or, however, that reaction products of the foaming agents with each other are used in amounts of 0.01 % by weight to 4.8 % by weight, wherein all percentages by weight relate to the weight of the thermoplastic to be foamed in each case.

2. Thermoplastic foams according to claim 1, characterised in that the acidic salts containing water of crystallisation are primary sulphates or primary or secondary phosphates which may also be used in admixture, and which have Na, K, Mg, Ca, Zn or Al as the counterion.

3. Thermoplastic foams according to claim 1, characterised in that acidic salts containing water of crystallisation are primary sodium or calcium phosphates.

4. Thermoplastic foams according to claims 1 to 3, characterised in that the thermoplastic is undried polycarbonate and/or undried polyester carbonate.

5. Thermoplastic foams according to claims 1 to 3, characterised in that the thermoplastic is a polysulphone or a polyether sulphone or an ABS polymer.

6. A process for producing the thermoplastic foams of claims 1 to 5, characterised in that the foaming agents or their reaction products with each other and the thermoplastics are extruded in an extruder at temperatures from 220°C to 380°C to form foamed mouldings or are injection moulded in injection moulding machines at temperatures from 220°C to 380°C to form foamed mouldings.

7. A process according to claim 6, characterised in that the usual additives such as reinforcing materials, nucleating agents, flame retardants, demoulding agents, lubricants, colorants, pigments and/or stabilisers are admixed, before foaming, with the thermoplastics to be foamed.

8. Foamed material mouldings, obtainable according to claim 7.

9. Thermoplastic foams according to claim 1, characterised in that the thermoplastics are mixtures of different thermoplastics.

10. Thermoplastic foams according to claim 9, characterised in that the thermoplastic mixtures are mixtures of polycarbonates and ABS polymers.

## Revendications

1. Mousses thermoplastiques en polycarbonates, polyéthercarbonates, polysulfones, polyéthersulfones ou polymères ABS ou en mélanges quelconques de ces matières thermoplastiques, caractérisées en ce que les agents porogènes utilisés sont des alumines hydratées (hydroxydes d'aluminium) en quantités de 0,01 à 4,8 % en poids en combinaison avec des acides organiques, des acides minéraux ou des sels d'acides contenant de l'eau de cristallisation, en quantités de 0,01 % à 4,8 % en poids, ou des produits de réaction des agents porogènes entre eux en quantités de 0,01 à 4,8 % en poids, toutes ces indications de pourcentages en poids se rapportant au poids des matières thermoplastiques à gonfler en mousse.

2. Mousses thermoplastiques selon la revendication 1, caractérisées en ce que les sels acides contenant de l'eau de cristallisation sont des sulfates primaires ou des phosphates primaires ou secondaires qui peuvent également être utilisés à l'état de mélange, et dont les ions complémentaires sont Na, K, Mg, Ca, Zn ou Al.

3. Mousses thermoplastiques selon la revendication 1, caractérisées en ce que les sels acides contenant de l'eau de cristallisation sont des phosphates de sodium ou de calcium primaires.

4. Mousses thermoplastiques selon les revendications 1 à 3, caractérisées en ce que la matière thermoplastique consiste en polycarbonates non séchés et/ou polyestercarbonates non séchés.

5. Mousses thermoplastiques selon les revendications 1 à 3, caractérisées en ce que la matière thermoplastique est une polysulfone ou une polyéthersulfone ou un polymère ABS.

6. Procédé de préparation des mousses thermoplastiques selon les revendications 1 à 5, caractérisé en ce que l'on extrude les agents porogènes ou leurs produits de réaction et les matières thermoplastiques à des températures de 220 à 380°C en corps moulés gonflés en mousse à l'extrudeuse ou bien on les transforme en corps moulés gonflés en mousse à des températures de 220 à 380°C dans des machines à mouler par injection.

7. Procédé selon la revendication 6, caractérisé en ce que, avant le gonflement en mousse, on mélange aux matières thermoplastiques à gonfler en mousse en mousse les additifs usuels tels que les matières renforçantes, les agents de nucléation, les agents ignifugeants, les agents de démoulage, les agents lubrifiants, les colorants, les pigments et/ou stabilisants.

8. Corps moulés en mousse obtenus selon la revendication 7.

9. Mousses thermoplastiques selon la revendication 1, caractérisées en ce que la matière thermoplastique consiste en un mélange de plusieurs matières thermoplastiques.

10. Mousses thermplastiques selon la revendication 9, caractérisées en ce que la matière thermoplastique consiste en un mélange de polycarbonate et de polymère ABS.
